(19) Europäisches Patentamt
European Patent Office
Office européen des brevets

(11) **EP 3 057 045 A1**

(12) **EUROPEAN PATENT APPLICATION**

(43) Date of publication:
**17.08.2016 Bulletin 2016/33**

(51) Int Cl.:
**G06Q 10/10** *(2012.01)*

(21) Application number: **16154880.5**

(22) Date of filing: **09.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.02.2015 DE 102015001809**

(71) Applicant: **Unify GmbH & Co. KG
80807 München (DE)**

(72) Inventor: **Georgiou, Dimitrios
15231 Chalandri (GR)**

(74) Representative: **Fritzsche, Thomas
Fritzsche Patent
Naupliastraße 110
81545 München (DE)**

(54) **METHOD FOR GENERATING AN ELECTRONIC MESSAGE ON AN ELECTRONIC MAIL CLIENT SYSTEM, COMPUTER PROGRAM PRODUCT FOR EXECUTING THE METHOD, COMPUTER READABLE MEDIUM HAVING CODE STORED THEREON THAT DEFINES THE METHOD, AND A COMMUNICATIONS DEVICE**

(57) The invention relates to a computer-implemented method for generating an electronic message on an electronic mail client system, the electronic message comprising a subject header text field and a message body text field, the method comprising the steps of a) parsing, by an e-mail parser, a string representing the electronic message, b) determining, by the e-mail parser, from the parsed string whether there is character content in the header subject text field, c) determining, by the e-mail parser, from the parsed string whether there is character content in the message body text field, d) determining, by the e-mail parser, whether a predefined character string is present in a subject header text field of the electronic message, and if it is determined that there is no character content in the message body text field, and if it is determined that no predefined character string is present in the subject header of the electronic message, and e) inserting, by the e-mail parser, into the subject header text field a predefined character string indicating that there is no character content in the message body text field. The invention further relates to a computer program product for executing the above mentioned method, and a non-transitory computer readable medium. Further, the invention relates to a communications device comprising an electronic mail client, the electronic mail client comprising a text editor, an e-mail parser and e-mail composer module, and a communications module, the electronic mail client being adapted for carrying out the above mentioned method.

Fig. 7

**Description**

The present invention relates to a method for generating an electronic message on an electronic mail client system. The present invention further relates to a computer program product for executing the method for generating an electronic message, a computer readable medium having code stored thereon that defines the method for generating an electronic message, and a communications device comprising an electronic mail client.

One of the most widely used communication means within the public space, including the corporate environment, is electronic mail (e-mail). Examples of e-mail client applications include MS Outlook, Apple's default client, Thunderbird, but also web-based e-mail systems provided through web browsers as services, from providers such as Google and Yahoo, which enable users to generate, receive, and send electronic messages to other users associated with a common or shared network. Basically, a user interface for writing an e-mail comprises a subject header which usually is used for indicating the subject of the e-mail, and a message body text field into which the actual e-mail message text may be input by an e-mail writer.

However, often a situation may arise that a sender of an e-mail message only needs to send a very short message. According to RFC5322 describing the Internet Message Format, in the subject header text field, each line of characters must be no more than 998 characters and should be no more than 77 characters, providing adequate space for a short message. Thus, in the above-mentioned situation, usually the subject header field of the e-mail is used to insert the intended short message text, thus, leaving the message body text field completely empty. However, depending on the application used to handle the e-mail message, the recipient is, in most of the cases, unaware of whether the received message still contains a message body or not. To deal with this problem, a common practice amongst frequent e-mail users is the manual insertion of an abbreviated string into the subject line to signify the end of message.

A general problem with respect to the above described procedure of manually inserting into the e-mail subject header text field an indication concerning the end of message is that it takes some time to add this indication, or it may even be forgotten by the e-mail writer to add such an indication.

Therefore, the present invention is based on the object to provide a more efficient and reliable procedure for generating an electronic message which only comprises text, i.e. character content, in the header subject text field.

This object is solved by a method for generating an electronic message on an electronic mail client system, a computer program product for executing the method for generating an electronic message, a computer readable medium having code stored thereon that defines the method for generating an electronic message, and a communications device comprising an electronic mail client. Preferred embodiments of the present invention are specified in the respective dependent claims.

According to the invention, there is provided a computer-implemented method for generating an electronic message on an electronic mail client system, the electronic message comprising a subject header text field and a message body text field, the method comprising the steps of

a) parsing, by an e-mail parser, a string representing the electronic message,
b) determining, by the e-mail parser, from the parsed string whether there is character content in the header subject text field,
c) determining, by the e-mail parser, from the parsed string whether there is character content in the message body text field,
d) determining, by the e-mail parser, whether a predefined character string is present in a subject header text field of the electronic message, and if it is determined that there is no character content in the message body text field, and if it is determined that no predefined character string is present in the subject header of the electronic message,
e) inserting, by the e-mail parser, into the subject header text field a predefined character string indicating that there is no character content in the message body text field.

By the inventive method, the recipient is informed by the automatic insertion of a predefined character string indicating in a reliable manner that the specific e-mail does not contain content in the message body text field. This, on the one hand, saves time for the e-mail recipient, since upon receiving such an e-mail, he does not have to go on to open the e-mail in order to read it. On the other hand, the e-mail writer saves time since he does not have to take care of the manual insertion of such an indication. Thereby, a very efficient, time-saving, as well as reliable method is provided for generating an electronic message, specifically, an electronic message comprising only a very short text written into the e-mail subject header text field. Thus, the method is very convenient for both the e-mail writer and the e-mail recipient as well.

According to a preferred embodiment of the invention, the predefined character string is an abbreviated text, in particular, an abbreviation for indicating end of message (EOM), and wherein the predefined character string is separated from the text content in the subject header text field. Preferably, the abbreviated character string may be a tag.

Depending on the application or language usage, any abbreviated text serving the purpose of signifying the lack of message body content may be inserted. For example, the abbreviation <EOM> standing for 'end of message', or <NB> standing for 'no embodiment' or 'no (message text) body' may be inserted in order to let the recipient thereby know that this specific e-mail does not contain any body content, thereby preventing the user to proceed with the action to open it and, thus, contributing to an efficient time utilization and more convenience.

According to a further preferred embodiment, the step c) of determining whether there is character content in the message body text field comprises determining whether there are US-ASCII characters and/or other entities, in particular, Multipurpose Internet Mail Extensions (MIME), present in the message body text field. Further, if it is determined that there are MIME entities present in the message body text field, the method may comprise a further step of determining whether the MIME entity has inline or attachment disposition, and if it is determined that the content disposition is attachment, the method comprises a further step of determining whether the attachment is of textual or non-textural nature, wherein if it is determined that the attachment is of non-textural nature, steps d) and e) are carried out.

Specifically, the message body text field may either comprise simple US-ASCII characters (range of 1 through 127), and/or it may also contain more complex extended formats such as Multipurpose Internet Mail Format (MIME, [RFC2045]), whereby the latter also possibly may comprise different types of non-textual entities as images, audio or video applications, and the like. Should, in the e-mail to be generated, a MIME extension be detected that is of non-textual nature, then not only the multipart content-type (for example, image/jpeg, audio/mp3, video/mp4, and application/MS Word etc.) has to be checked but also the content disposition (if present). The content disposition header field was defined with [RFC2183] to specify the presentation style. A MIME part can have either 'in line' or 'attachment' content disposition. In cases when the content disposition is attachment of non-textual type then the client may automatically inject, e.g., an <EOM> tag in the message subject header field.

The method may further comprise a step of receiving, by a communications module, an instruction for sending the electronic mail preceding the step a) of parsing a string representing the electronic message.

In order to avoid any redundancies or errors, or specifically, in cases, when a recipient responds to a received e-mail message which already includes, e.g., an <EOM> tag in the message subject header field but the recipient now uses the message body text field to write a response, the method further preferably comprises a step of removing the predefined character string from the subject header text field. Thus, according to a preferred embodiment, if it is determined in step c) that there is content in the message body text field, and if it is determined in step d) that the predefined character string is present in the subject header of the electronic message, the method further comprises a step of removing the predefined character string from the subject header text field.

According to the present invention, there is also provided a computer program product for executing the method as specified above.

Moreover, according to the present invention, there is provided a non-transitory computer readable medium having code stored thereon that defines a method that is implemented when the code is executed, the method defined by the code comprising the steps outlined above,

Further, a communications device comprising an electronic mail client is provided according to the present invention, the electronic mail client comprising a text editor, an e-mail parser and e-mail composer module, and a communications module, the electronic mail client system being adapted for carrying out the method according to any one of the preceding claims.

Further advantages, features and characteristics of the invention will become apparent from the subsequent description of preferred embodiments with reference to the drawing, in which

Fig. 1    shows a schematic illustration of an e-mail system comprising an electronic mail client according to an embodiment of the present invention;

Fig. 2    shows a schematic illustration of an e-mail client according to an embodiment of the present invention;

Fig. 3    shows a schematic illustration of a user interface of the e-mail client shown in Fig. 2;

Fig. 4    shows a schematic illustration of a user interface of an e-mail client inbox of the e-mail client shown in Fig. 2;

Fig. 5    shows an example of an e-mail message thread;

Fig. 6    shows a schematic illustration of a user interface of an e-mail client according to a further embodiment of the invention;

Fig. 7    shows a flow chart illustrating the steps of the computer-implemented method for generating an electronic message on a communications device according to an embodiment of the invention.

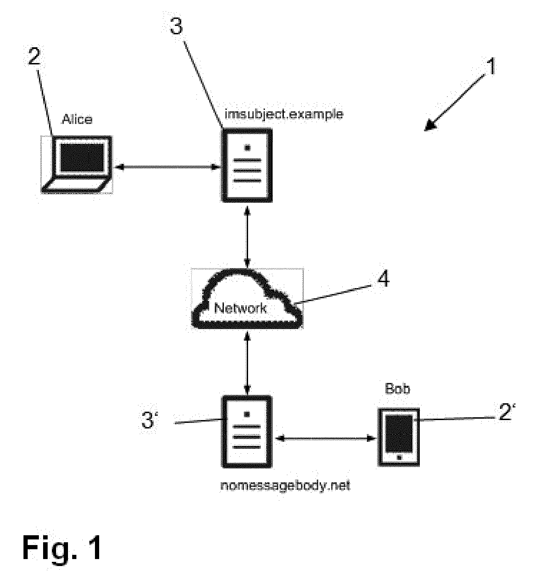

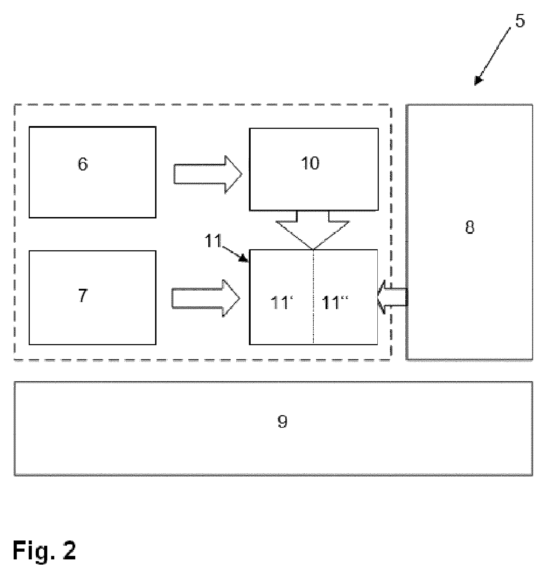

Fig. 1 shows a simplified schematic illustration of the components and entities of an electronic mail (e-mail) system 1 comprising a first communications device 2 on which an e-mail client 5 (see Fig. 2) is implemented, a second communications device 2', (on which a further e-mail client 5 is implemented), a first e-mail server 3 for the first communications device 2, a second e-mail-server 3' for the second communications device 2', and a network 4 via which the first and second communications devices 2, 2' are connected to each other operatively. The network 4 may be the Internet, a LAN, a wireless network or any other type of connection via which the first and second communications devices 2, 2' may communicate. Further, in the embodiment shown here, there are two human users involved, namely, Alice using the first communications device 2 implemented in the example as laptop computer equipped with a first e-mail client, and Bob using the second communications device 3' implemented in the example as smartphone or tablet PC equipped with the second electronic mail client. However, any type of device suitable for operating an e-mail client software or service, for example also a PDA etc. may be used as client end device.

Fig. 2 shows a schematic illustration of an e-mail client 5 according to an embodiment of the present invention which is implemented, e.g., on the laptop computer 2 or on the tablet PC 2' shown in Fig. 1. The e-mail client 5 as its main components basically comprises a simple text editor 6, an address book 7, a filing cabinet 8, a communications module 9 (for example, SMTP), a memory 10, and an e-mail parser and e-mail composer module 11. The e-mail composer 11' of the e-mail parser and e-mail composer module 11 is responsible for all actions relating to the sending of an e-mail, whereas the e-mail parser 11" of the e-mail parser and e-mail composer module 11 reads the message from the memory 10 and prepares the electronic message for sending, ensuring thereby compliance with the relevant RFCs. The text editor 6 allows for the creation of an electronic message itself and usually also includes simple spell checking and formatting facilities. The address book 7 allows the user to store, for example, e-mail addresses he/she often uses. The filing cabinet 8 allows for storage of e-mail messages, both sent and received, and usually provides a search function, allowing an easy retrieval of a desired message. Finally, the communications module 9 is the component of the e-mail client 5 that deals with the actual communication of e-mail messages to and from the e-mail server 3, 3' (see Fig. 1).

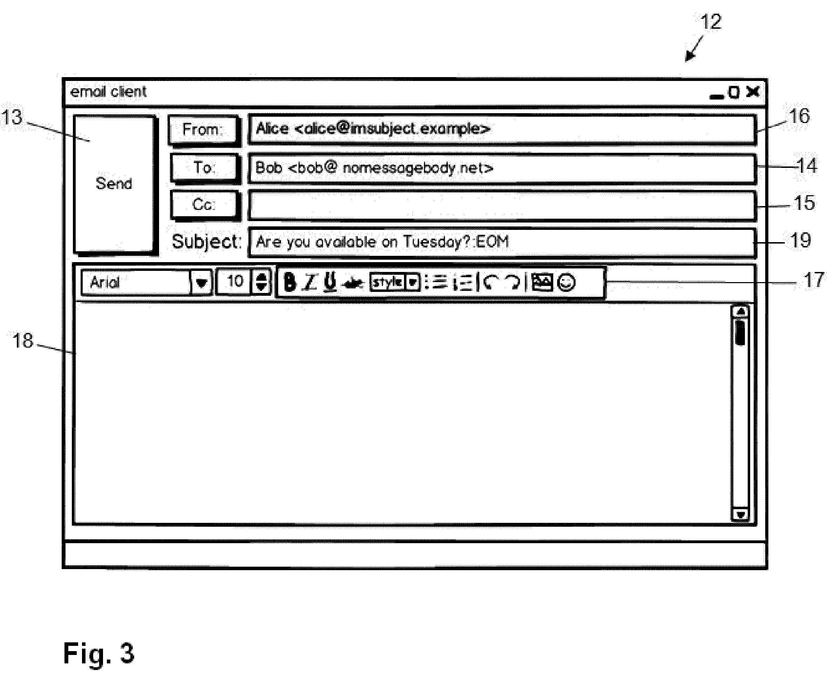

Fig. 3 shows a schematic illustration of a user interface 12 of the e-mail client 5 as shown in Fig. 2. First, it should be mentioned that generally, an e-mail message consists of header fields and a message body. Header fields are lines beginning with a field name, followed by a colon (":"), followed by a field body, and terminated by CRLF (carriage return/line feed pair).

As can be seen in the embodiment shown in Fig. 3, the user interface 12, here, is implemented as an initial e-mail composing window which includes, amongst others, a "To" recipient e-mail address input text field 14, a "Cc" recipient e-mail address input text field 15 indicating a recipient of a copy of an e-mail, and a "From" text field 16 indicating a sender of an e-mail. Further, the user interface 12 comprises a send button 13 which permits the user to send the e-mail to the recipients designated in the "To" and "Cc" recipient text fields 14, 15.

Further, there are provided several buttons and pull-down menus 17 for formatting text which an e-mail writer may write into a message body text field 18 which here is empty. Further, text may be written into the subject header text field 19 which usually functions for indicating the subject matter of the e-mail, but which may also be used for writing a short message without using the message body text field 18 for this. Into the subject header text field 19, either simple US-ASCII characters (range 1 to 127) may be inserted, or more complex extended formats may be used, such as Multipurpose Internet Mail Extension (MIME, [RFC2045]) which may also comprise, as outlined previously, media, text, images, applications or any other type known in the art.

The general procedure for indicating a recipient of an e-mail in such a case as mentioned above according to which a user only uses the subject header text field 19 for writing a message and does not write any further text into the message body text field 18 which thus remains empty is outlined in the following. The sender of the e-mail message (here: Alice, indicated in the "From" text field 16) has used the subject header text field 19 for writing the message "Are you available on Tuesday?". As soon as the e-mail sender triggers the sending of this e-mail, e.g. by clicking on the send button 13, the e-mail client 5 shown in Fig. 2 used by the sender (Alice, see also Fig. 1) detects that the e-mail body text field 18 is empty. In the e-mail parser 11" (see Fig. 2), the insertion of a predefined abbreviated character string or tag is performed automatically, if it is determined at the same time that there is text in the subject header text field 19. The abbreviated character string or tag may be implemented, for example, as "EOM" indicating the three initial letters of the expression "END OF MESSAGE". However, depending on the application or language used, any abbreviated text serving the purpose of indicating a recipient of an e-mail that there is no further text in the message body text field 18 may be appropriate as well. Further, either one of the following formats may be used when the insertion is performed whereby the tag can be inserted either at the beginning of the field body, followed by a colon (:) or at the end of the field body separated again by a colon as shown in the example below:

"Subject:" <EOM><:><subject text><CRLF> or "Subject:"<subject text><:><EOM><CRLF>

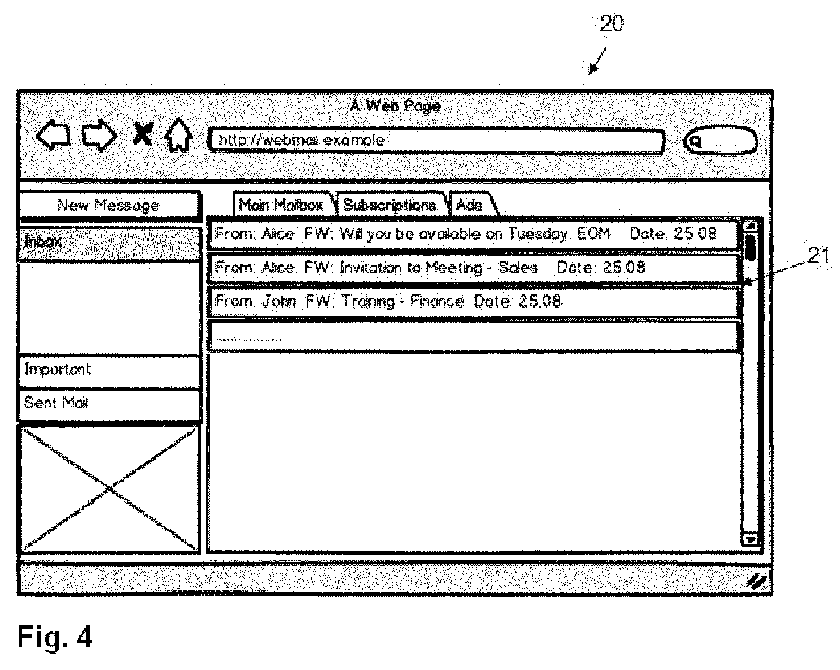

Fig. 4 shows a schematic illustration of a user interface 20 of an e-mail client inbox of an e-mail client 5 as shown in Fig. 2. Here, an example of the inbox of the recipient (here: Bob, indicated in the "To" text filed 14 of Fig. 3) of the e-mail as described above with respect to Fig. 3 is shown. The recipient of this e-mail receives the e-mail message through his/her domain exchange server 3' (see Fig. 1) which is then presented on the graphical user interface 20 of the e-mail client 5 that he uses. The user interface 20 comprises a feed area 21 including the user's e-mail inbox where received e-mails are displayed. Depending on the e-mail client interface 20, e-mail messages which have been received and are now available in the user's inbox are usually displayed with specific header field information, such as "From", the "date", and also the "subject".

The recipient of this e-mail message will know only by reading the line of the e-mail message displayed in the feed area 21 which says "From: Alice FW: Will you be available on Tuesday: EOM Date 25.08" that there is no further message body in the e-mail so that he does not have to go on opening the e-mail, thereby saving valuable time.

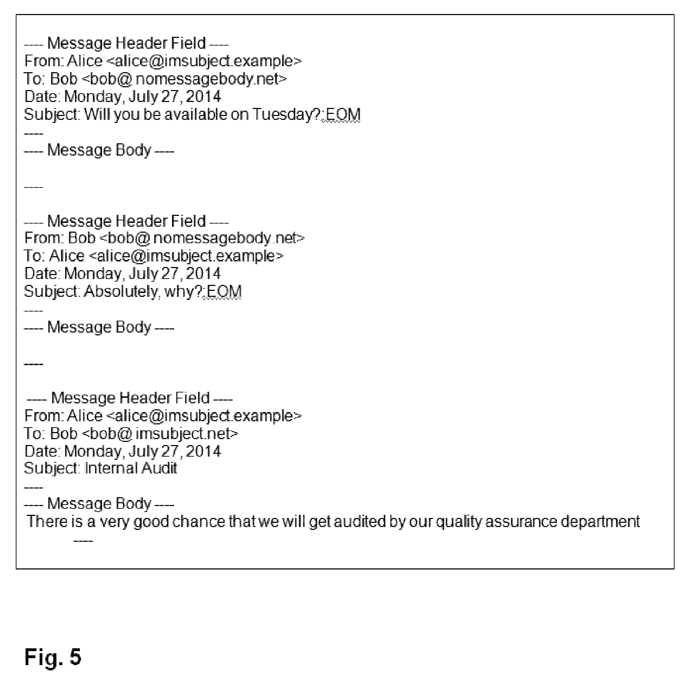

Fig. 5 shows an example of an e-mail thread 22 with three messages presenting a conversation between the sender (Alice) of the e-mail as described with reference to Fig. 3 and the recipient (Bob) of this e-mail as described with reference to Fig. 4. As can be seen here, the sender (Alice) initiates a message to the recipient (Bob) explicitly using only the subject header text field 19 for message content. The recipient (Bob) receives the message and he knows from the indication "EOM" at the end of the subject line that there is no message body content included. He now selects to send an e-mail exclusively using the subject header text field 19 (see Fig. 3). Thus, automatically, an <EOM> tag is added by its e-mail client. The initial sender (Alice) who now is recipient of Bob's message in a third e-mail message changes the subject of the thread and enters content in the message body text field 18 (see Fig. 3). In this case, her e-mail client ensures that the <EOM> tag (if present in the subject header text field 19) is removed so that the recipient of this new e-mail will know that there is further text available and he has to open the e-mail for reading it completely.

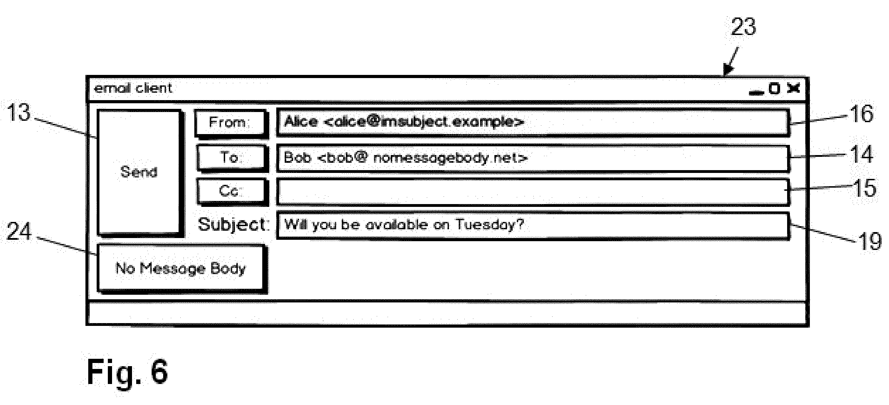

Fig. 6 shows a schematic illustration of a user interface 23 of an e-mail client according to a further embodiment of the invention. This user interface 23 which basically comprises the components described above with respect to Fig. 3, additionally includes a "no message body" button 24 which allows a user to manually insert an "EOM" tag when he decides not to use the message body text field 18 and only uses the subject header text field 19 for writing a message. This embodiment, for example, is of specific relevance when considering cases in which the message body text field 18 already includes an automatically generated text, such as a signature with a closing form, the signature of the e-mail sender, contact data of the e-mail sender, and/or a confidentiality note or the like. If such automatically included text is present in the message body text field 18, this - although not providing any relevant information when a sender intends to send a short message only using the subject header text field 19 - cancels the automatic insertion mechanism of, e.g., an <EOM> tag to the subject header text field 19. However, in such a case, the user or e-mail sender may use the "no message body" button 24 to thereby add an <EOM> tag manually by clicking on that button.

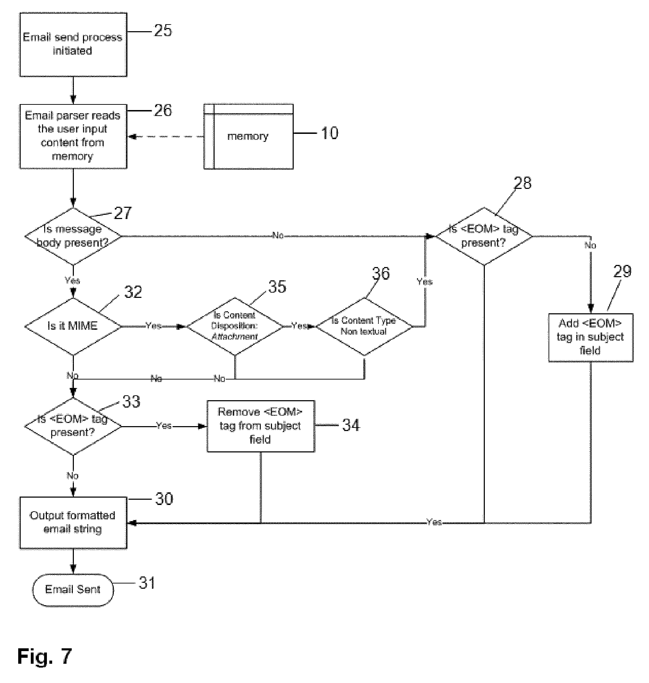

Fig. 7 shows a flow chart illustrating the steps of the computer-implemented method for generating an electronic message on a communications device 2, 2' (see Fig. 1) on an electronic mail client 5 (see Fig. 2) according to an embodiment of the invention. First, the procedure starts with an initiation of an e-mail send process in step 25. After initiation of the e-mail send process in step 25, the e-mail parser reads the user input content from the memory 10 in step 26. Specifically, the e-mail parser parses a string representing an electronic message. Then, the e-mail parser determines in a further step 27 whether there is character content in the message body text field 19 or not. If it is determined by the e-mail parser from the parsed string that there is no character content in the message body text field, then the method proceeds with a further query in step 28 whether there already is a predefined character string, e.g., implemented as an <EOM> tag, present in the subject header text field 19. If it is determined that there is no predefined character string, e.g.,<EOM> tag, present, then a further step 29 of automatically adding or inserting a predefined character string, e.g., an <EOM> tag, to the subject header text field 19 is performed by the e-mail parser. Subsequently, in step 30, a formatted e-mail string is output, and finally, in step 31, the e-mail thus generated is sent.

If in step 27, it is determined that there in fact is message body present in the message body text field 19, then a step 32 of checking whether it is MIME is carried out. If it is determined that it is not MIME, then in step 33, it is determined whether a predefined character string, as an <EOM> tag, is already present. If negative, then the method proceeds again with steps 30 and 31 by outputting a formatted e-mail string and sending the thus generated e-mail. In case there already is a predefined character string present, then the method further comprises a step 34 of removing the predefined character string, as the <EOM> tag from the subject header text field 19, before proceeding with steps 30 and 31.

If in step 32, it is determined that it is MIME, then there is a further step 35 of checking whether the content disposition is an attachment. If it is not an attachment, then steps 33, 30, and 31 (or 33, 34, 30, 31) are carried out to complete the e-mail generation and sending procedure. If it is determined in step 35 that the content disposition is "attachment", then it is further checked in step 36 whether the content type is non textual. If it is non textual, steps 28, 29, 30 and 31 are carried out for completion of the e-mail generation and sending procedure. If it is determined that it is textual, then however, the method further proceeds with steps 33, 30, and 31 (or 33, 34, 30, and 31) as already outlined above for completion of the e-mail generation and sending procedure.

It should be noted that the features of the invention which have been described above with respect to specific embodiments, such as input fields or specific components of the e-mail client, may also be present in other embodiments, except for these features being excluded with respect to specific embodiments or if their implementation technically is not possible. Further, the features which have been described above in specific combinations do not necessarily have to be implemented in all of the embodiments.

**Reference numerals**

| 1 | electronic mail (e-mail) system |
|---|---|
| 2, 2' | first and second communications devices |
| 3, 3' | first and second e-mail servers |
| 4 | network |
| 5 | e-mail client |
| 6 | text editor |
| 7 | address book |
| 8 | filing cabinet |
| 9 | communications module |
| 10 | memory |
| 11 | e-mail parser and e-mail composer module |
| 11' | e-mail composer |
| 11" | e-mail parser |
| 12 | user interface of e-mail client |
| 13 | send button |
| 14 | "To" recipient e-mail address input text field |
| 15 | "Cc" recipient e-mail address input text field |
| 16 | "From" text field |
| 17 | buttons and pull-down menus for formatting text |
| 18 | message body text field |
| 19 | subject header text field |
| 20 | user interface of an e-mail client inbox |
| 21 | feed area |
| 22 | e-mail thread |
| 23 | user interface of e-mail client |
| 24 | "no message body" button |
| 25 - 31 | method steps |

**Claims**

1.  Computer-implemented method for generating an electronic message on an electronic mail client (5), the electronic message comprising a subject header text field (19) and a message body text field (18), the method comprising the steps of

    a) parsing, by an e-mail parser (11 "), a string representing the electronic message,
    b) determining, by the e-mail parser (11 "), from the parsed string whether there is character content in the header subject text field (19),
    c) determining, by the e-mail parser (11 "), from the parsed string whether there is character content in the message body text field (18),
    d) determining, by the e-mail parser (11 "), whether a predefined character string is present in the subject header text field (19) of the electronic message, and if it is determined that there is no character content in the message body text field (18), and if it is determined that no predefined character string is present in the subject header text field (19) of the electronic message,
    e) inserting, by the e-mail parser (11 "), into the subject header text field (19) a predefined character string indicating that there is no character content in the message body text field (18).

2.  Method according to claim 1, wherein the predefined character string is an abbreviated text, in particular, an abbreviation for indicating end of message (EOM), and wherein the predefined character string is separated from the text content in the subject header text field (19).

3.  Method according to claim 1 or 2, wherein the predefined character string is a tag indicating that there is no character content in the message body text field (18).

4.  Method according to any one of claims 1 to 3, wherein the step c) comprises determining whether there are US-ASCII characters and/or other entities, in particular, Multipurpose Internet Mail Extensions (MIME), present in the message body text field (18).

5.  Method according to claim 4, wherein, if it is determined that there are MIME entities present in the message body text field (18), the method comprises a further step of determining whether the MIME entity has inline or attachment disposition, and if it is determined that the content disposition is attachment, the method comprises a further step of determining whether the attachment is of textual or non-textural nature, wherein if it is determined that the attachment is of non-textural nature, steps d) and e) are carried out.

6.  Method according to any one of claims 1 to 5, comprising a step of receiving, by a communications module (2, 2'), an instruction for sending the electronic mail preceding the step a).

7.  Method according to any one of claims 1 to 6, wherein if it is determined in step c) that there is content in the message body text field (18), and if it is determined in step d) that the predefined character string is present in the subject header text field (19) of the electronic message , the method further comprises a step of removing the predefined character string from the subject header text field (19).

8.  Computer program product for executing the method of one of the preceding claims.

9.  Non-transitory computer readable medium having code stored thereon that defines a method that is implemented when the code is executed, the method defined by the code comprising the steps according to any one of claims 1 to 7.

10. Communications device (2, 2') comprising an electronic mail client (5), the electronic mail client (5) comprising a text editor (6), an e-mail parser and e-mail composer module (11), and a communications module (9), the electronic mail client (5) being adapted for carrying out the method according to any one of the preceding claims.

Fig. 1

**Fig. 2**

**email client**  ‗ ▢ ✕

| 13 | | | 16 |

**Send**

**From:** Alice <alice@imsubject.example>

**To:** Bob <bob@ nomessagebody.net>

**Cc:**

**Subject:** Are you available on Tuesday? :EOM

Arial ▾ | 10 ⬍ | **B** *I* U̲ ✎ [style]▾ ፧≡ ፧≡ | ↺ ↻ | 🖼 ☺

12

14

15

19

17

18

**Fig. 3**

**Fig. 4**

EP 3 057 045 A1

```
---- Message Header Field ----
From: Alice <alice@imsubject.example>
To: Bob <bob@ nomessagebody.net>
Date: Monday, July 27, 2014
Subject: Will you be available on Tuesday?:EOM

----
---- Message Body ----


----

---- Message Header Field ----
From: Bob <bob@ nomessagebody.net>
To: Alice <alice@imsubject.example>
Date: Monday, July 27, 2014
Subject: Absolutely, why?:EOM
----
---- Message Body ----


----

 ---- Message Header Field ----
From: Alice <alice@imsubject.example>
To: Bob <bob@ imsubject.net>
Date: Monday, July 27, 2014
Subject: Internal Audit
----
---- Message Body ----
 There is a very good chance that we will get audited by our quality assurance department
        ----
```

**Fig. 5**

Fig. 6

Fig. 7

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/198924 A1 (COLLET JEAN LUC [FR] ET AL) 5 August 2010 (2010-08-05) * paragraph [0005] - paragraph [0016] * * figure 1 * ----- | 1-10 | INV. G06Q10/10 |
| X | US 6 092 101 A (BIRRELL ANDREW D [US] ET AL) 18 July 2000 (2000-07-18) * column 1, line 64 - column 2, line 12 * * column 2, line 37 - column 4, line 9 * * column 4, line 62 - column 5, line 27 * * figures 1,2 * ----- | 1-10 | |
| X | US 2010/100370 A1 (KHOURI JOSEPH [US] ET AL) 22 April 2010 (2010-04-22) * paragraph [0001] - paragraph [0001] * * paragraph [0011] - paragraph [0024] * * figures 1,2 * ----- | 1-10 | |
| X | US 2004/221295 A1 (KAWAI KENJI [US] ET AL) 4 November 2004 (2004-11-04) * paragraph [0036] - paragraph [0047] * * paragraph [0075] - paragraph [0082] * * figures 1,2,12,13 * ----- | 1-10 | TECHNICAL FIELDS SEARCHED (IPC) G06Q |

The present search report has been drawn up for all claims

| Place of search | Date of completion of the search | Examiner |
|---|---|---|
| Munich | 11 April 2016 | Melis, Caterina |

## ANNEX TO THE EUROPEAN SEARCH REPORT
## ON EUROPEAN PATENT APPLICATION NO.

EP 16 15 4880

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2016

| Patent document cited in search report | | | Publication date | Patent family member(s) | | | Publication date |
|---|---|---|---|---|---|---|---|
| US 2010198924 | A1 | | 05-08-2010 | US | 2010198924 | A1 | 05-08-2010 |
| | | | | US | 2015295866 | A1 | 15-10-2015 |
| US 6092101 | A | | 18-07-2000 | NONE | | | |
| US 2010100370 | A1 | | 22-04-2010 | NONE | | | |
| US 2004221295 | A1 | | 04-11-2004 | CA | 2534288 | A1 | 10-02-2005 |
| | | | | EP | 1661341 | A1 | 31-05-2006 |
| | | | | US | 2004221295 | A1 | 04-11-2004 |
| | | | | US | 2005055359 | A1 | 10-03-2005 |
| | | | | US | 2006190493 | A1 | 24-08-2006 |
| | | | | US | 2009307630 | A1 | 10-12-2009 |
| | | | | US | 2011067037 | A1 | 17-03-2011 |
| | | | | US | 2012130961 | A1 | 24-05-2012 |
| | | | | US | 2013268610 | A1 | 10-10-2013 |
| | | | | US | 2014122450 | A1 | 01-05-2014 |
| | | | | US | 2015100595 | A1 | 09-04-2015 |
| | | | | WO | 2005013571 | A1 | 10-02-2005 |

EPO FORM P0459

For more details about this annex : see Official Journal of the European Patent Office, No. 12/82